# EUROPEAN PATENT APPLICATION

(11) **EP 4 531 152 A1**
(43) Date of publication of application: **02.04.2025**
(21) Application number: 23217670.1
(22) Date of filing: 18.12.2023
(51) Int. Cl.: H01M 10/0525, H01M 50/103, H01M 50/176, H01M 50/528, H01M 50/55, H01M 50/553, H01M 50/593

(54) **CELL, BATTERY, ELECTRIC DEVICE, AND INSULATOR ADHESION METHOD**

(30) Priority: 26.09.2023 CN 202322641448 U
(71) Applicant: AESC Japan Ltd., Yokohama-Shi, Kanagawa 220-0012 (JP)
(72) Inventor: LU, Tianqi, Jiangyin City, Wuxi City, 214443 (CN); ZHANG, Jie, Jiangyin City, Wuxi City, 214443 (CN)
(74) Representative: Becker, Eberhard

(57) **Abstract**

A cell (10), a battery, an electric device, and an insulator adhesion method are provided. The cell (10) includes an electrode assembly (11), a pin, a first insulator (14), and a second insulator (15). The electrode assembly (11) includes a tab (112). The connector (13) includes a post terminal connection part (131) connected to a post terminal (122) of the cell (10) and a tab connection part (131) connected to the tab (112). The first insulator (14) partially covers a surface of the tab connection part (131). The second insulator (15) partially covers the post terminal connection part (131). At least one of the first insulator (14) and the second insulator (15) includes an adhesive region (141) and a non-adhesive region (142) while the non-adhesive region (142) of one of the first insulator (14) and the second insulator (15) at least partially overlaps with the other one.

## Description

### BACKGROUND

### Technical Field

This application relates to the field of batteries, and particularly, to a cell, a battery, an electric device, and an insulator adhesion method.

### Related Art

In recent years, new energy vehicles have become a new trend in the automotive industry and are being used by an increasing number of consumers. As the power source of new energy vehicles, power battery packs are widely used in the field of new energy vehicles. In conventional batteries, the inner side of the positive and negative electrode pins of a cell is in contact with the electrode assembly of the battery, which may easily cause a short circuit. Thus, insulators are generally attached to the inner side of the positive and negative electrode pins for insulation protection. However, fitting of the conventional insulators is not easy, the fitting effect is poor, and there is a risk of a short circuit.

### SUMMARY

In view of the disadvantages in the art described above, an objective of this application is to provide a cell, a battery, an electric device, and an insulator adhesion method to improve the following issues with conventional insulators: fitting of the insulator is difficult, the fitting effect is poor between the insulator and the pin, and as a result, a large gap may be formed so there is a risk of occurrence of a short circuit; also, the adhesive is exposed in a partial region of the insulator corresponding to the pin, so there is a risk of decrease in the adhesiveness of the adhesive layer and thus partial detachment.

To achieve the above objective and other related objectives, a first aspect of this application provides a cell including an electrode assembly, a pin, a first insulator, and a second insulator. The electrode assembly includes a tab. The connector includes a post terminal connection part and a tab connection part. The post terminal connection part and the tab connection part are located on different horizontal surfaces, the post terminal connection part is connected to a post terminal of the cell, and the tab connection part is connected to the tab. The first insulator at least partially covers a surface of the tab connection part that is close to the electrode assembly. The second insulator at least partially covers the post terminal connection part. At least one of the first insulator and the second insulator includes an adhesive region and a non-adhesive region, and the non-adhesive region of one insulator in the first insulator and the second insulator at least partially overlaps with the other insulator in the first insulator and the second insulator to form an overlapping region.

In an embodiment of this application, the first insulator includes the adhesive region and the non-adhesive region, the non-adhesive region at least partially covers the post terminal connection part, and the second insulator at least partially overlaps with the non-adhesive region to form the overlapping region; or the second insulator includes the adhesive region and the non-adhesive region, the non-adhesive region at least partially covers the tab connection part, and the first insulator at least partially overlaps with the non-adhesive region to form the overlapping region.

In an embodiment of this application, with the first insulator including the adhesive region and the non-adhesive region, the second insulator is at least partially arranged on a surface of the non-adhesive region that is away from the post terminal connection part to form the overlapping region; with the second insulator including the adhesive region and the non-adhesive region, the first insulator is at least partially arranged on a surface of the non-adhesive region that is away from the tab connection part to form the overlapping region.

In an embodiment of this application, both the first insulator and the second insulator include the adhesive region and the non-adhesive region, and the non-adhesive region of the first insulator at least partially overlaps with the non-adhesive region of the second insulator to form the overlapping region.

In an embodiment of this application, the overlapping region is fixedly connected by a third insulator or an adhesive.

In an embodiment of this application, a length of the non-adhesive region is a, a length of a shorter one of the first insulator and the second insulator is b, a width of the overlapping region is W, and an expression a/2≤W≤b/2 is satisfied.

In an embodiment of this application, with the first insulator including the adhesive region and the non-adhesive region, a boundary line between the adhesive region and the non-adhesive region is located in a region of the first insulator that corresponds to the tab connection part; with the second insulator including the adhesive region and the non-adhesive region, a boundary line between the adhesive region and the non-adhesive region is located in a region of the second insulator that corresponds to the post terminal connection part.

In an embodiment of this application, the connector further includes a bent part, and the post terminal connection part is connected to the tab connection part via the bent part.

In an embodiment of this application, the non-adhesive region further includes a thinned region, and the thinned region is located in a portion of the non-adhesive region that corresponds to the bent part.

In an embodiment of this application, a thickness of the thinned region is c, a thickness of a region of the first insulator and/or the second insulator excluding the thinned region is d, and an expression 0<c<d/2 is satisfied.

In an embodiment of this application, a width of the thinned region is L, a radius of the bent part is R, and an expression R<L<2R is satisfied.

In an embodiment of this application, a pre-bent part is provided at a portion of the non-adhesive region that corresponds to the bent part.

In an embodiment of this application, a thickness at a connected part at which the pre-bent part is connected with another portion excluding the pre-bent part is less than a thickness of the another portion excluding the pre-bent part; or a thickness of the pre-bent part is less than the thickness of the another portion excluding the pre-bent part.

In an embodiment of this application, a distance between two connected parts at which two ends of the pre-bent part are connected with the another portion excluding the pre-bent part is greater than or equal to 0.7 times a length of the bent part.

In an embodiment of this application, along a width direction of the pin, a plurality of thinned regions are provided at the connected part, and a thickness of the thinned regions is less than a thickness of another portion excluding the thinned regions.

In an embodiment of this application, the tab connection part is provided with a first groove, the first groove extends from one end of the tab connection part that is away from the bent part toward another end that is close to the bent part, and a length of the first groove is less than a length of the tab connection part.

In an embodiment of this application, a thinned area is provided on one side of the tab connection part that is away from the first insulator, and the thinned area is provided along a circumferential direction of the first groove.

In an embodiment of this application, the first insulator is provided with a second groove, and, with the first insulator covered on the tab connection part, the second groove corresponds to the first groove.

This application further provides a battery including the cell described in any of the embodiments above.

This application further provides an electric device including the cell described in any of the embodiments above.

Another aspect of this application provides an insulator adhesion method including: a first step of adhering a first insulator onto a connector of a cell, the first insulator including an adhesive region and a non-adhesive region; and a second step of adhering a second insulator onto the connector of the cell, at least a part of the second insulator being adhered on the non-adhesive region of the first insulator.

The first step further includes a shaping step including: first, adhering the adhesive region of the first insulator to a tab connection part of the pin, the connector further including a bent part and a post terminal connection part, and the bent part connecting the tab connection part and the post terminal connection part; and next, spreading the non-adhesive region of the first insulator evenly along the bent part of the pin, such that the non-adhesive region is fit on the bent part and is at least partially fit on the post terminal connection part of the pin.

Further, the non-adhesive region may be pressed by an external structure to spread evenly and fit on the pin.

This application provides a cell, a battery, and an electric device, in which the first insulator and/or the second insulator is provided with an adhesive region and a non-adhesive region. The adhesive region of the first insulator and/or the second insulator does not cover the bent part, and the non-adhesive region of one insulator in the first insulator and the second insulator covers the bent part and at least partially overlaps with the other insulator. Accordingly, the insulator is fit more easily at the bent part without being affected by adhesion, the difficulty in fitting between the insulator and the connector is reduced, and the fitting effect is improved.

This application provides a cell, a battery, and an electric device, in which the first insulator and/or the second insulator is provided with an adhesive region and a non-adhesive region, and the first insulator and the second insulator at least partially overlap with each other to form an overlapping region. Accordingly, it is possible to further improve its fitting effect, prevent formation of a large gap at the connector bent part and thus exposure of metal, and prevent the risk of cutting by metal chip burrs at the exposed part. The second insulator is partially covered on the first insulator to form an overlapping region, which prevents the risk of partial detachment of the insulator, and thus prevents the risk of a short circuit of the cell.

This application provides a cell, a battery, and an electric device, in which a thinned region or a pre-bent part is provided at a part of the non-adhesive region that corresponds to the bent part, which makes it easier to bend the insulator, reduces the adhesion difficulty, and improves its fitting effect.

This application provides an insulator adhesion method, in which the first insulator is provided with the adhesive region and the non-adhesive region, and at least a part of the adhesive region of the second insulator is adhered onto the non-adhesive region of the first insulator. The shaping step is performed to improve fitting of the insulator on the cell connector to reduce the risk of formation of a gap in the fitting between the insulator and the cell connector and thus prevent the risk of a short circuit of the cell.

### BRIEF DESCRIPTION OF DRAWINGS

To more clearly illustrate the technical solutions of the embodiments of this application, drawings required for the description of the embodiments will be briefly described below. Obviously, the drawings described below only illustrate some embodiments of this application. For persons skilled in the art, other drawings may be obtained based on these drawings without creative effort.
FIG. 1 is a schematic structure diagram of a cell according to some embodiments of this application.
FIG. 2 is a schematic cross-sectional structure diagram of the cell according to some embodiments of this application.
FIG. 3 is a schematic diagram of a connector adhered with an insulator and a cover plate assembly according to some embodiments of this application.
FIG. 4 is a schematic partial diagram of the connector adhered with the insulator and the cover plate assembly according to some embodiments of this application.
FIG. 5 is a schematic top view of the connector adhered with the insulator and the cover plate assembly according to some embodiments of this application.
FIG. 6 is a schematic cross-sectional structure diagram taken along A-A in FIG. 5.
FIG. 7 is a schematic enlarged structure diagram at B in FIG. 6.
FIG. 8 is a schematic diagram of a first insulator according to some embodiments of this application.
FIG. 9 is a schematic partial diagram of the connector adhered with the insulator and the cover plate assembly according to other embodiments of this application.
FIG. 10 is a schematic partial diagram of the connector adhered with the insulator and the cover plate assembly according to still other embodiments of this application.
FIG. 11 is a schematic diagram when adhering the first insulator according to some embodiments of this application.
FIG. 12 is a schematic diagram after adhering the first insulator in FIG. 11.
FIG. 13 is a schematic diagram when adhering a second insulator in FIG. 12.
FIG. 14 is a schematic structure diagram of the connector according to other embodiments of this application.
FIG. 15 is a schematic structure diagram of the first insulator according to other embodiments of this application.

### REFERENCE SIGNS LIST

10: cell; 11: electrode assembly; 12: cover plate assembly; 13: connector; 14: first insulator; 15: second insulator; 111: main body; 112: tab; 121: cover plate body; 122: post terminal; 131: post terminal connection part; 132: tab connection part; 133: bent part; 141: adhesive region; 142: non-adhesive region; 1401: boundary line; 143: first thinned region; 144: pre-bent part; 145: second thinned region; 1321: first groove; 1322: thinned area; 146: second groove.

### DESCRIPTION OF EMBODIMENTS

Embodiments of this application will be described based on specific examples, and persons skilled in the art can easily understand the other advantages and effects of this application according to the content disclosed in this specification. This application may be further implemented or applied according to other different specific embodiments, and the various details in this specification may also be modified or changed based on different viewpoints and applications without departing from the spirit of this application.

It should be noted that the drawings accompanying the embodiments only illustrate the basic concepts of this application in a schematic manner, so the drawings only show components related to this application and are not drawn according to the actual quantities, shapes, and sizes of components during actual implementation. The form, quantity, and proportion of each component during actual implementation may be changed in any manner, and the layout of components may also be more complex.

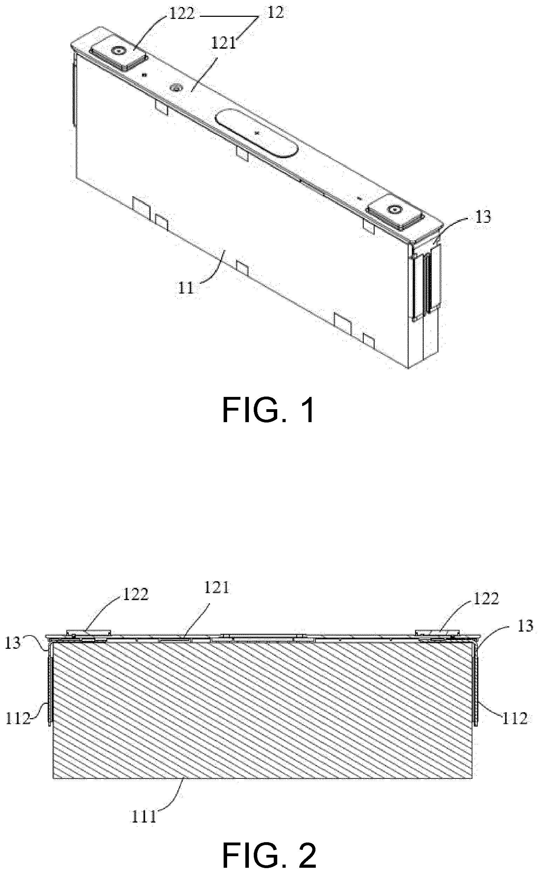

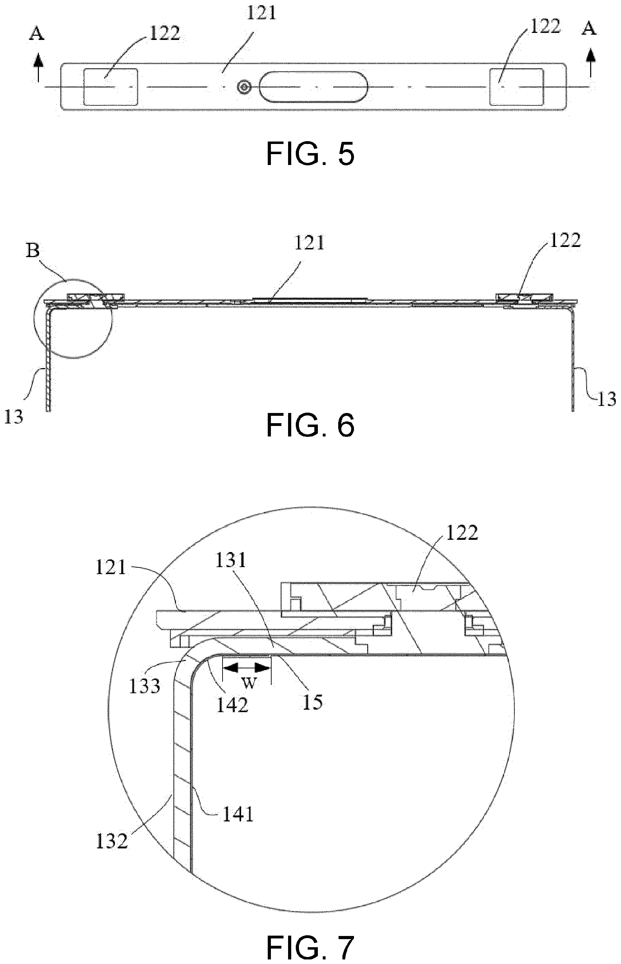

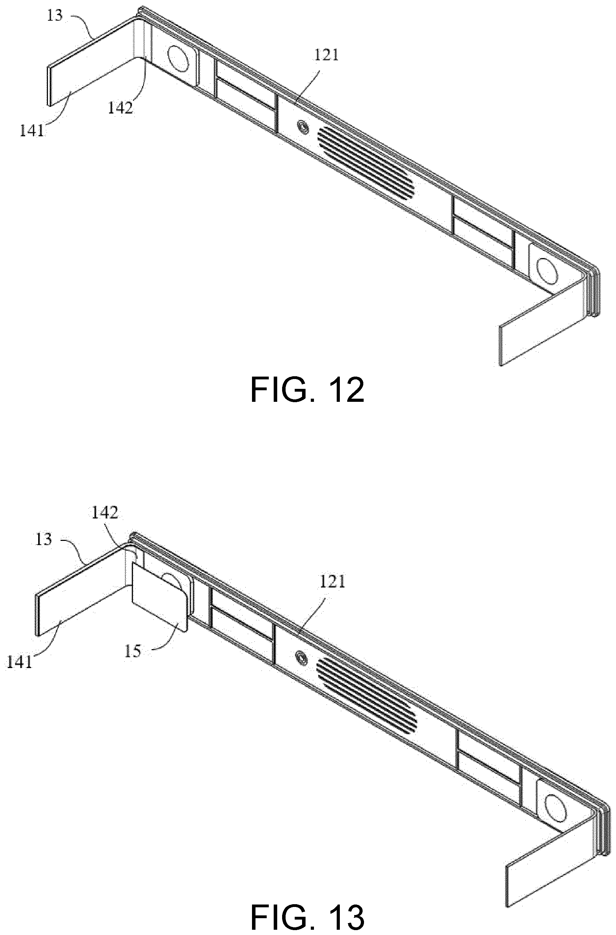

Referring to FIG. 1 to FIG. 15, in conventional batteries, the inner side of the positive and negative electrode pins of a cell is directly connected to the electrode assembly of the battery, which can easily cause a short circuit. Due to the restriction on the inner side of the positive and negative electrode pins being a transition region, the conventional battery cell does not provide protection thereon, and the inner side of the positive and negative electrode pins is in a state with metal exposed. The exposed metal may cause a short circuit between the connector and the electrode assembly of the battery. The existing solutions generally involve attaching an insulator to the inner side of the positive and negative electrode pins for insulation protection, but fitting of the conventional insulators is difficult, and the fitting effect between the insulators and the pins is poor. As a result, a large gap may be formed so there is a risk of occurrence of a short circuit. Also, the adhesive is exposed in a partial region of the insulator corresponding to the pin, so there is a risk of decrease in the adhesiveness of the adhesive layer and thus partial detachment. Thus, this application provides a cell, a battery, and an electric device to improve the following issues with conventional insulators: fitting of the insulator is difficult, the fitting effect is poor in a region of the insulator corresponding to the connector bent part, and as a result, a large gap may be formed so there is a risk of occurrence of a short circuit; also, the adhesive is exposed in a region of the insulator corresponding to the connector bent part, so there is a risk of decrease in the adhesiveness of the adhesive layer and thus partial detachment. Specifically, a cell 10 includes an electrode assembly 11, a cover plate assembly 12, a connector 13, a first insulator 14, and a second insulator 15. The electrode assembly 11 includes a main body 111 and a tab 112 extending from the main body 111. For example, the tab 112 is located on two sides of the main body 111. The cover plate assembly 12 includes a cover plate body 121 and a post terminal 122 provided at the cover plate body 121. The connector 13 is electrically connected to the post terminal 122 and the tab 112, respectively, and the first insulator 14 and the second insulator 15 are covered on the connector 13 to provide insulation protection. Of course, in some other embodiments, the post terminal 122 may also be arranged at other positions of the cell, for example, on a cell shell.

Referring to FIG. 1 to FIG. 4, in this embodiment, the connector 13 includes a post terminal connection part 131, a tab connection part 132, and a bent part 133. The post terminal connection part 131 is connected to the tab connection part 132 via the bent part 133. That is, the post terminal connection part 131 and the tab connection part 132 are located on different horizontal surfaces. The post terminal connection part 131 is electrically connected to the post terminal 122. For example, the post terminal connection part 131 is welded to the post terminal 122. The tab connection part 132 is electrically connected to the tab 112. Specifically, after the connector 13 is connected to the cover plate assembly 12, the connector 13 is bent to form the bent part 133 and extends in a direction away from the cover plate body 121 of the cover plate assembly 12 to form the tab connection part 132. In this embodiment, the bent part 133 corresponds to a position at the edge of the electrode assembly 11. The edge refers to an intersecting line between of the upper surface and the left or right surface of the electrode assembly 11, and the upper surface is the side of the electrode assembly 11 that is closest to the lower surface of the cover plate assembly 12.

Referring to FIG. 1 to FIG. 4 and FIG. 8, in this embodiment, the first insulator 14 is at least partially covered on the surface of the tab connection part 132 that is close to the electrode assembly 11, and the second insulator 15 at least partially covers the post terminal connection part 131. At least one of the first insulator 14 and the second insulator 15 includes an adhesive region and a non-adhesive region, and the non-adhesive region of one insulator in the first insulator 14 and the second insulator 15 at least partially overlaps with the other insulator to form an overlapping region. Taking the first insulator 14 including an adhesive region 141 and a non-adhesive region 142 as an example, the adhesive region 141 is at least covered on the surface of the tab connection part 132 that is close to the electrode assembly 11, for example, covered on the surface of the tab connection part 132 that is close to the main body 111. The non-adhesive region 142 is covered on the bent part 133, and the non-adhesive region 142 is at least partially covered on the surface of the post terminal connection part 131 that is away from the post terminal 122. Accordingly, a part of exposed metal of the connector 13 is prevented from short-circuiting with the electrode assembly 11, and the safety of the cell 10 during use is improved. Also, the part of metal of the connector 13 covered by the first insulator 14 can also be prevented from being corroded by air, which improves the service life of the connector 13 and thus improves overall reliability of the cell 10 during use. It should be noted that a boundary line 1401 between the adhesive region 141 and the non-adhesive region 142 in the first insulator 14 is located in a region of the first insulator 14 that corresponds to the tab connection part 132. That is, when the first insulator 14 covers the connector 13, the adhesive region 141 avoids the bent region of the connector 13 and is arranged on a plane of the tab connection part 132 of the connector 13. Accordingly, it is possible to avoid arranging the adhesive in the bent region and affecting adhesion of the first insulator 14, and it is thus possible to reduce the adhesion difficulty of the first insulator 14 and improve its fitting effect.

Referring to FIG. 1 to FIG. 4 and FIG. 8, in conventional fitting of the insulator and the pin, the fitting effect is poor in the region of the first insulator that corresponds to the connector bent part, which causes a large gap. As a result, the adhesive is exposed in the region of the first insulator that corresponds to the connector bent part and is likely to adhere metal chips and welding burrs produced by connector welding, so there is a risk of fall-off of metal chips. Also, after soaking in electrolyte, there is a risk of reduced adhesiveness of the adhesive layer in the exposed region of the adhesive, so there is a risk of partial detachment of the insulator. Thus, in this embodiment, the second insulator 15 covers the post terminal connection part 131, and at least partially overlaps with the non-adhesive region 142 of the first insulator 14 to form an overlapping region. Specifically, the second insulator 15 is at least partially covered on the surface of the non-adhesive region 142 that is away from the post terminal connection part 131 to form an overlapping region with the non-adhesive region 142 of the second insulator 15. Accordingly, it is possible to further improve its fitting effect, prevent formation of a large gap at the connector bent part and thus exposure of metal, prevent the risk of cutting by metal chip burrs at the exposed part, prevent the risk of partial detachment of the insulator, and thus prevent the risk of a short circuit of the cell. It should be noted that the first insulator 14 and the second insulator 15 are adhesive tapes, but not limited to adhesive tapes. Also, the electrode assembly 11 is a box structure, the pins 13 connected to the positive electrode tab and the negative electrode tab of the electrode assembly 11 are both provided with the first insulator 14 and the second insulator 15, and the electrode assembly 11 may specifically be a stacked body and/or a winding structure.

In some other embodiments, it is also possible to only configure the second insulator 15 to include an adhesive region and a non-adhesive region. The adhesive region covers the post terminal connection part 131, the non-adhesive region at least partially covers the tab connection part 132, and the first insulator 14 at least partially overlaps with the non-adhesive region to form an overlapping region. For example, the first insulator 14 is at least partially covered on the surface of the non-adhesive region that is away from the tab connection part 132 to form an overlapping region. In that case, a boundary line between the adhesive region and the non-adhesive region is located in the region of the second insulator 15 that corresponds to the post terminal connection part 131. That is, when the second insulator 15 covers the connector 13, the adhesive region avoids the bent region of the connector 13 and is arranged on the plane of the post terminal connection part 131 of the connector 13. In other embodiments, the first insulator 14 and the second insulator 15 may both include an adhesive region and a non-adhesive region, in which the non-adhesive region of the first insulator 14 at least partially overlaps with the non-adhesive region of the second insulator 15 to form an overlapping region, and the overlapping region is fixedly connected by a third insulator or an adhesive.

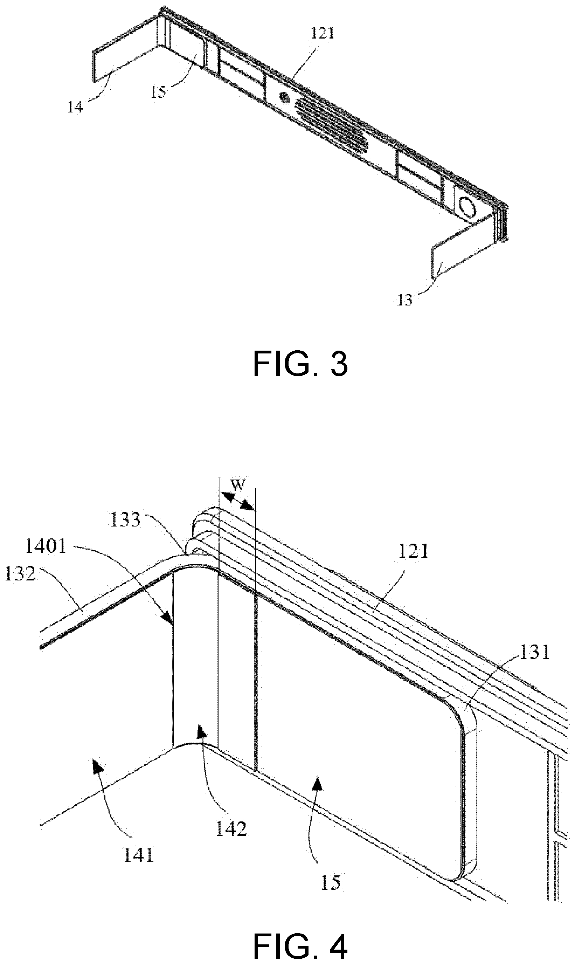

Referring to FIG. 4 to FIG. 7, in this embodiment, the length of the non-adhesive region 142 of the first insulator 14 and/or the second insulator 15 is a, the length of the shorter one of the first insulator 14 and the second insulator 15 is b, the width of the overlapping region of the first insulator 14 and the second insulator 15 is W, and an expression a/2≤W≤b/2 is satisfied. Accordingly, the overlapping region would not be too small and require improvement in the equipment to enhance the positioning precision of the adhesive fixture, or the overlapping region would not be too large and cause the non-adhesive region to be too large, which causes the insulator to fall due to its own weight and affects the insulating performance. Taking the first insulator 14 including the adhesive region and the non-adhesive region as an example, the non-adhesive region of the first insulator 14 partially overlaps with the second insulator 15, the length of the non-adhesive region of the first insulator 14 is a, the length of the second insulator 15 is b, and the width W of the overlapping region satisfies the above expression.

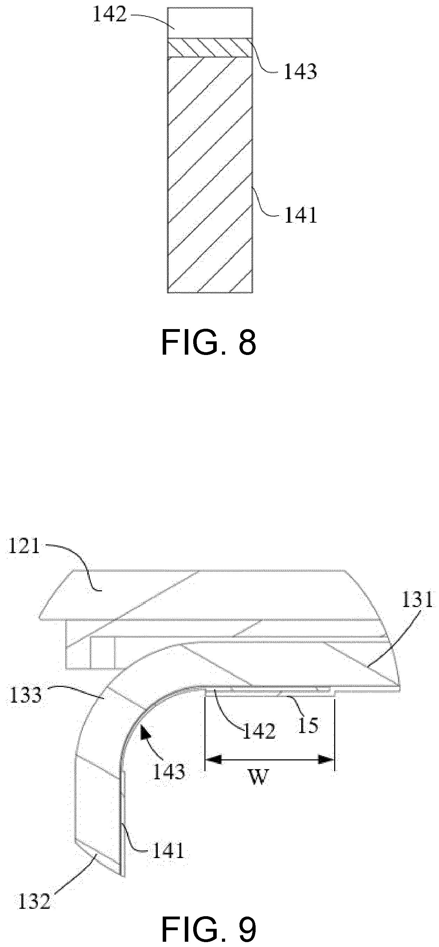

Referring to FIG. 8 and FIG. 9, since the first insulator 14 and/or the second insulator 15 has a specific hardness, it is difficult to maintain its bent state, and there is certain operational difficulty in its fitting process. Thus, in this embodiment, a first thinned region 143 is provided at the first insulator 14 and/or the second insulator 15. The first thinned region 143 is located in a portion of the non-adhesive region 142 in the first insulator 14 and/or the second insulator 15 that corresponds to the bent part 133. That is, the first thinned region 143 is located within the non-adhesive region 142 and corresponds to the bent part 133 of the connector 13. Accordingly, it is possible to bend the first insulator 14 or the second insulator 15 more easily and maintain the bent state of the first insulator 14 or the second insulator 15 and thus reduce its adhesion difficulty. In this embodiment, the thickness of the first thinned region 143 is c, the thickness of the region of the first insulator 14 or the second insulator 15 excluding the thinned region is d, and an expression 0<c≤d/2 is satisfied. Further, the width of the first thinned region 143 is L, the radius of the bent part 133 is R, and an expression R<L<2R is satisfied. Accordingly, when the first insulator 14 or the second insulator 15 is bent, it is possible to prevent wrinkling on the surface in the bent region that is away from the connector 13. Further, in some other embodiments, a bending mark may also be provided in advance in the first thinned region 143 to further facilitate bending of the first insulator 14 or the second insulator 15 and maintaining of the bent state of the first insulator 14 or the second insulator 15 and thus reduce its adhesion difficulty.

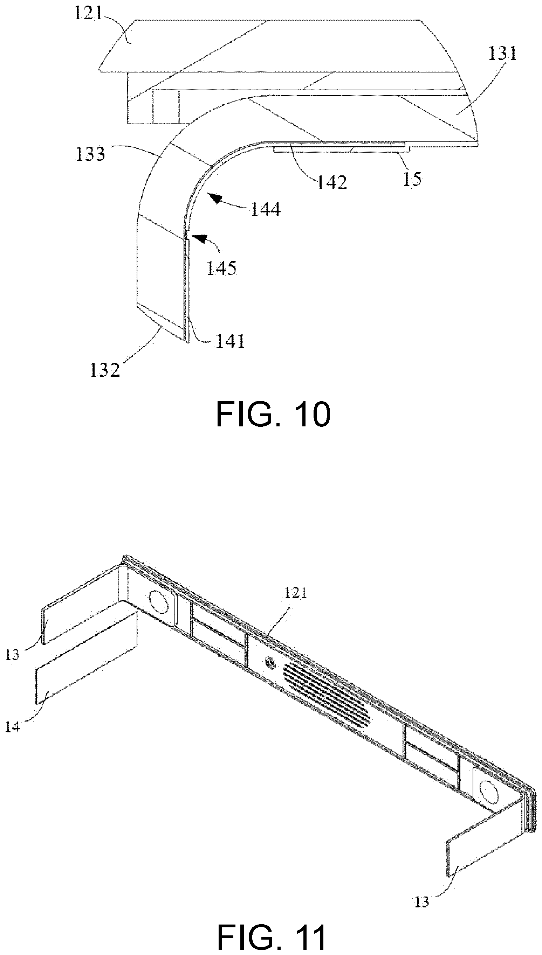

Referring to FIG. 10, in some other embodiments, when the first insulator 14 and/or the second insulator 15 includes the adhesive region and the non-adhesive region, a pre-bent part 144 is provided at the insulator including the non-adhesive region in the first insulator 14 and/or the second insulator 15, and the pre-bent part 144 corresponds to the bent part 133. The following embodiment will take the first insulator 14 including the adhesive region 141 and the non-adhesive region 142 as an example. The pre-bent part 144 is located in the portion of the non-adhesive region 142 that corresponds to the bent part 133. That is, the pre-bent part 144 is located within the non-adhesive region 142 and corresponds to the bent part 133 of the connector 13. Accordingly, it is possible to facilitate bending of the first insulator 14 and maintaining of the bent state of the first insulator 14 and thus reduce its adhesion difficulty. In this embodiment, the thickness of a connected part between the pre-bent part 144 and the other portion of the first insulator 14 excluding the pre-bent part 144 is less than the thickness of the other portion of the first insulator 14 excluding the pre-bent part 144. For example, a second thinned region 145 is provided at the first insulator 14, the second thinned region 145 is located at a junction between the post terminal connection part 131 and the bent part 133 and/or a junction between the bent part 133 and the tab connection part 132, and extends along the width direction of the first insulator 14. Accordingly, it is possible to facilitate bending and attachment of the first insulator 14. In some other embodiments, more thinned regions may also be provided at the pre-bent part 144 and located between the second thinned region 145 at the junction of the post terminal connection part 131 and the bent part 133 and the second thinned region 145 at the junction of the bent part 133 and the tab connection part 132. Further, in some other embodiments, the thickness of the pre-bent part 144 may also be configured to be less than the thickness of the other portion of the first insulator 14 excluding the pre-bent part 144 to facilitate bending and adhesion of the first insulator 14 while avoiding wrinkling on the surface of the pre-bent part 144 that is away from the connector 13.

Referring to FIG. 10, in some other embodiments, the distance between two connected parts at which the two ends of the pre-bent part 144 are connected with the other portion of the first insulator 14 excluding the pre-bent part 144 is greater than or equal to 0.7 times the length of the bent part 133 in the connector 13, so the pre-bent part 144 can cover the main region of the bent part 133 and can also prevent wrinkling of the first insulator 14 when fitting to the bent part 133. Further, the distance between the two connected parts at which the two ends of the pre-bent part 144 is connected with the other portion of the first insulator 14 excluding the pre-bent part 144 is less than or equal to 1.3 times the length of the bent part 133 in the connector 13.

Referring to FIG. 10, in some other embodiments, along the width direction of the connector 13, a plurality of second thinned regions 145 are provided at the connected part between the pre-bent part 144 and the other portion of the first insulator 14, and the thickness of the second thinned region 145 is less than the thickness of the other portion of the first insulator 14 excluding the second thinned region 145. That is, a plurality of second thinned regions 145 are provided at intervals at the connected part between the pre-bent part 144 and the other portion of the first insulator 14. Accordingly, while the first insulator 14 is thinned to facilitate bending and adhesion, the overall structural strength of the first insulator 14 can be improved to prevent rupture of the thinned region due to tension during the adhesion process and thus affecting the insulating performance. It should be noted that the first thinned region 143 and the second thinned region 145 are formed by locally pressing the non-adhesive region 142 of the first insulator 14. The thickness of the first insulator 14 is locally reduced without reducing the insulating performance of the first insulator 14 to facilitate bending of the first insulator 14 and maintaining of the bent state of the first insulator 14 and thus reduce its adhesion difficulty. It should be noted that when the second insulator 15 includes the adhesive region and the non-adhesive region, it is also possible to provide a pre-bent part and a second thinned region thereon, and the relationship and features between the second insulator 15, the pre-bent part, and the second thinned region are the same as or similar to the relationship and features between the first insulator 14, the pre-bent part 144, and the second thinned region 145 in the first insulator 14.

Referring to FIG. 11 to FIG. 13 and FIG. 3, in this embodiment, taking the first insulator 14 including the adhesive region 141 and the non-adhesive region 142 as an example, the process of adhering the insulator onto the connector 13 is as follows.

In a first step, the first insulator 14 is adhered onto the connector 13. Specifically, the adhesive region 141 of the first insulator 14 is first adhered to the tab connection part 132 of the connector 13.

In a second step, the non-adhesive region 142 of the first insulator 14 is spread evenly along the bent part 133 of the connector 13, so that the non-adhesive region 142 is fit on the bent part 133 and at least partially fit on the post terminal connection part 131 of the connector 13. The non-adhesive region 142 may be pressed by an external structure to spread evenly and fit on the connector 13.

In a third step, the second insulator 15 is adhered to the post terminal connection part 131 of the connector 13 and is at least partially covered on the surface of the non-adhesive region 142 of the first insulator 14 that is located on the post terminal connection part 131 to form an overlapping region.

According to the above insulator adhesion method, the second insulator 15 can cover the post terminal connection part 131 and at least partially overlap with the non-adhesive region 142 of the first insulator 14 to form an overlapping region. Specifically, the second insulator 15 is at least partially covered on the surface of the non-adhesive region 142 that is away from the post terminal connection part 131 to form an overlapping region with the non-adhesive region 142 of the first insulator 14. Accordingly, it is possible to further improve its fitting effect, prevent formation of a large gap at the connector bent part and thus exposure of metal, prevent the risk of cutting by metal chip burrs at the exposed part, prevent the risk of partial detachment of the insulator, and thus prevent the risk of a short circuit of the cell.

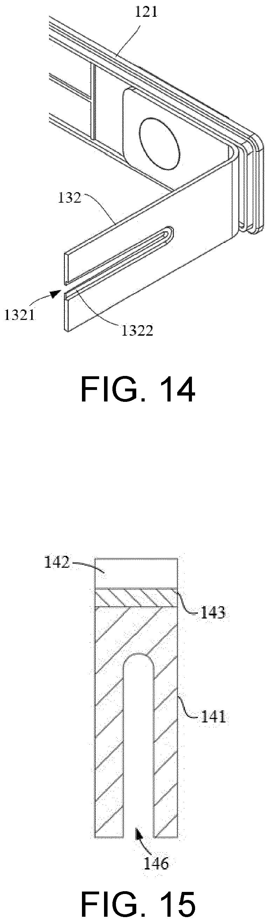

Referring to FIG. 14 and FIG. 15, in some other embodiments, a first groove 1321 is provided on the tab connection part 132. The first groove 1321 extends from one end of the tab connection part 132 that is away from the bent part 133 toward another end that is close to the bent part 133, and the length of the first groove 1321 is less than the length of the tab connection part 132 to facilitate connection with the tab 112. Further, a thinned area 1322 is provided on one side of the tab connection part 132 that is away from the first insulator 14. The thinned area 1322 is provided along the circumferential direction of the first groove 1321, and the thinned area 1322 is formed by compressing a local region along the circumferential direction of the first groove 1321 in the tab connection part 132 to improve the structural strength of the tab connection part 132. Correspondingly, a second groove 146 is provided on the first insulator 14. When the first insulator 14 covers the tab connection part 132, the second groove 146 corresponds to the first groove 1321 to improve adhesion on the tab connection part 132.

Referring to FIG. 1 to FIG. 15, this embodiment further provides a battery. The battery includes at least one cell 10 described in the above embodiments. For example, the battery includes several cells 10. The electrode assembly 11 in the cell 10 is connected to the connector 13. The first insulator 14 and the second insulator 15 are covered on the connector 13, which can prevent a part of exposed metal of the connector 13 from short-circuiting with the electrode assembly 11, improve the safety during the use of the cell 10, and also reduce the risk of electric leakage of the battery. Also, the part of metal of the connector 13 covered by the first insulator 14 and the second insulator 15 can be prevented from being corroded by air, which improves the service life of the connector 13, improves overall service life of the battery, and thus improves overall reliability of the battery module during use. It should be noted that the battery may be a battery module formed by series connection or parallel connection of a plurality of cells, or a combination of series connection and parallel connection of a plurality of cells. Alternatively, a plurality of such battery modules may be assembled to form a battery pack, or a battery pack and a battery module may be formed directly by assembling the cells.

Referring to FIG. 1 to FIG. 15, this embodiment further provides an electric device. The electric device includes the cell described in the above embodiments. The electric device is, for example, equipment such as a car, an energy storage cabinet, etc.

This application provides a cell, a battery, and an electric device, in which the first insulator and/or the second insulator is provided with an adhesive region and a non-adhesive region. The adhesive region of the first insulator and/or the second insulator does not cover the bent part, and the non-adhesive region of one insulator in the first insulator and the second insulator covers the bent part and at least partially overlaps with the other insulator. Accordingly, the insulator is fit more easily at the bent part without being affected by adhesion, the difficulty in fitting between the insulator and the connector is reduced, and the fitting effect is improved.

This application provides a cell, a battery, and an electric device, in which the first insulator and/or the second insulator is provided with an adhesive region and a non-adhesive region, and the first insulator and the second insulator at least partially overlap with each other to form an overlapping region. Accordingly, it is possible to further improve its fitting effect, prevent formation of a large gap at the connector bent part and thus exposure of metal, and prevent the risk of cutting by metal chip burrs at the exposed part. The second insulator is partially covered on the first insulator to form an overlapping region, which prevents the risk of partial detachment of the insulator, and thus prevents the risk of a short circuit of the cell.

This application provides a cell, a battery, and an electric device, in which a thinned region or a pre-bent part is provided at a part of the non-adhesive region that corresponds to the bent part, which makes it easier to bend the insulator, reduces the adhesion difficulty, and improves its fitting effect.

The above description only illustrates the preferred embodiments of this application and the technical principles used. Persons skilled in the art should understand that the scope involved in this application is not limited to the technical solutions formed by specific combinations of the above technical features, but should also cover other technical solutions formed by any combination of the above technical features or their equivalent features without departing from the concept of the disclosure, such as technical solutions formed by replacing the above features with (but not limited to) technical features having similar functions disclosed in this application.

Except for the technical features in the specification, the other technical features are known to persons skilled in the art. To highlight the innovative features of this application, the other technical features will not be further elaborated on herein.

## Claims

1. A cell (10) comprising:
an electrode assembly (11) comprising a tab (112);
a connector (13) comprising a post terminal connection part (131) and a tab (112) connection part, wherein the post terminal connection part (131) and the tab connection part (132) are located on different horizontal surfaces, the post terminal connection part (131) is connected to a post terminal (122) of the cell (10), and the tab connection part (132) is connected to the tab (112);
a first insulator (14) at least partially covering a surface of the tab connection part (132) that is close to the electrode assembly (11); and
a second insulator (15) at least partially covering the post terminal connection part (131), wherein
at least one of the first insulator (14) and the second insulator (15) comprises an adhesive region (141) and a non-adhesive region (142), and the non-adhesive region (142) of one insulator in the first insulator (14) and the second insulator (15) at least partially overlaps with the other insulator in the first insulator (14) and the second insulator (15) to form an overlapping region.

2. The cell (10) according to claim 1, wherein the first insulator (14) comprises the adhesive region (141) and the non-adhesive region (142), the non-adhesive region (142) at least partially covers the post terminal connection part (131), and the second insulator (15) at least partially overlaps with the non-adhesive region (142) to form the overlapping region; or the second insulator (15) comprises the adhesive region (141) and the non-adhesive region (142), the non-adhesive region (142) at least partially covers the tab (112) connection part, and the first insulator (14) at least partially overlaps with the non-adhesive region (142) to form the overlapping region,
wherein, with the first insulator (14) comprising the adhesive region (141) and the non-adhesive region (142), the second insulator (15) is at least partially arranged on a surface of the non-adhesive region (142) that is away from the post terminal connection part (131) to form the overlapping region; with the second insulator (15) comprising the adhesive region (141) and the non-adhesive region (142), the first insulator (14) is at least partially arranged on a surface of the non-adhesive region (142) that is away from the tab connection part (132)to form the overlapping region.

3. The cell (10) according to any one of claims 1, wherein both the first insulator (14) and the second insulator (15) comprise the adhesive region (141) and the non-adhesive region (142), and the non-adhesive region (142) of the first insulator (14) at least partially overlaps with the non-adhesive region (142) of the second insulator (15) to form the overlapping region, wherein the overlapping region is fixedly connected by a third insulator or an adhesive.

4. The cell (10) according to any one of claims 1 to 3, wherein a length of the non-adhesive region (142) is a, a length of a shorter one of the first insulator (14) and the second insulator (15) is b, a width of the overlapping region is W, and an expression a/2≤W≤b/2 is satisfied.

5. The cell (10) according to any one of claims 1 to 4, wherein, with the first insulator (14) comprising the adhesive region (141) and the non-adhesive region (142), a boundary line (1401) between the adhesive region (141) and the non-adhesive region (142) is located in a region of the first insulator (14) that corresponds to the tab (112) connection part; with the second insulator (15) comprising the adhesive region (141) and the non-adhesive region (142), a boundary line between the adhesive region (141) and the non-adhesive region (142) is located in a region of the second insulator (15) that corresponds to the post terminal connection part (131).

6. The cell (10) according to any one of claims 1 to 5, wherein the connector (13) further comprises a bent part (133), and the post terminal connection part (131) is connected to the tab connection part (132) via the bent part (133).

7. The cell (10) according to any one of claims 1 to 6, wherein the non-adhesive region (142) further comprises a thinned region, and the thinned region is located in a portion of the non-adhesive region (142) that corresponds to the bent part (133), wherein a thickness of the thinned region is c, a thickness of a region of at least one of the first insulator (14) and the second insulator (15) excluding the thinned region is d, and an expression 0<c≤d/2 is satisfied.

8. The cell (10) according to any one of claims 1 to 7, wherein a width of the thinned region is L, a radius of the bent part (133) is R, and an expression R<L<2R is satisfied.

9. The cell (10) according to any one of claims 1 to 8, wherein a pre-bent part (144) is provided at a portion of the non-adhesive region (142) that corresponds to the bent part (133), wherein a thickness at a connected part at which the pre-bent part (144) is connected with another portion excluding the pre-bent part (144) is less than a thickness of the another portion excluding the pre-bent part (144); or a thickness of the pre-bent part (144) is less than the thickness of the another portion excluding the pre-bent part (144).

10. The cell (10) according to any one of claims 1 to 9, wherein a distance between two connected parts at which two ends of the pre-bent part (144) are connected with the another portion excluding the pre-bent part (144) is greater than or equal to 0.7 times a length of the bent part (133).

11. The cell (10) according to any one of claims 1 to 10, wherein the tab connection part (132) is provided with a first groove (1321), the first groove (1321) extends from one end of the tab connection part (132) that is away from the bent part (133) toward another end that is close to the bent part (133), and a length of the first groove (1321) is less than a length of the tab (112) connection part.

12. The cell (10) according to any one of claims 1 to 11, wherein a thinned area (1322) is provided on one side of the tab connection part (132) that is away from the first insulator (14), and the thinned area (1322) is provided along a circumferential direction of the first groove (1321), wherein the first insulator (14) is provided with a second groove (146), and, with the first insulator (14) covered on the tab (112) connection part, the second groove (146) corresponds to the first groove (1321).

13. A battery comprising the cell (10) according to any one of claims 1 to 12.

14. An electric device comprising the cell (10) according to any one of claims 1 to 12.

15. An insulator adhesion method comprising:
a first step of adhering a first insulator (14) onto a connector (13) of a cell (10), wherein the first insulator (14) comprises an adhesive region (141) and a non-adhesive region (142); and
a second step of adhering a second insulator (15) onto the connector (13) of the cell (10), wherein at least a part of the second insulator (15) is adhered on the non-adhesive region (142) of the first insulator (14),
wherein the first step further comprises a shaping step comprising:
first, adhering the adhesive region (141) of the first insulator (14) to a tab connection part (132) of the pin, wherein the connector (13) further comprises a bent part (133) and a post terminal connection part (131), and the bent part (133) connects the tab connection part (132) and the post terminal connection part (131); and
next, spreading the non-adhesive region (142) of the first insulator (14) evenly along the bent part (133) of the pin, such that the non-adhesive region (142) is fit on the bent part (133) and is at least partially fit on the post terminal connection part (131) of the pin,
wherein the non-adhesive region (142) is pressed by an external structure to spread evenly and fit on the pin.
